# EUROPEAN PATENT SPECIFICATION

(11) **EP 1 948 708 B1**
(45) Date of publication and mention of the grant of the patent: **10.10.2012**
(21) Application number: 06812599.6
(22) Date of filing: 14.11.2006
(51) Int. Cl.: C08F 265/06, C08F 265/04

(54) **ACRYLIC POLYMER BEADS AND SOL COMPOSITION CONTAINING THE SAME**
ACRYLPOLYMERPERLEN UND DIESE ENTHALTENDE SOLZUSAMMENSETZUNG
PERLES DE POLYMERE ACRYLIQUE ET COMPOSITION DE SOLUTION LES CONTENANT

(30) Priority: 14.11.2005 KR 20050108464
(43) Date of publication of application: 30.07.2008
(73) Proprietor: KOLON INDUSTRIES, INC., Kwacheon-city Kyunggi-do 427-709 (KR)
(72) Inventor: KANG, Chung Seock, Gyeonggi-do 449-120 (KR); YOON, Young Seo, Seoul 135-240 (KR); KIM, Jong Han, Gyeonggi-do 449-060 (KR)
(74) Representative: Merkle, Gebhard
(86) International application number: PCT/KR2006/004771
(87) International publication number: WO 2007/055550

(56) References cited:
- EP-A1- 0 536 935
- WO-A1-2004/009649
- WO-A2-02/44290
- KR-A- 19980 057 234
- US-A- 5 157 084
- US-A- 5 157 084
- US-B1- 6 235 810
- J. Brandrup, E. H. Immergut, E. A. Grulke: "Polymer Handbook" 1999, John Wiley & Sons, INC , Wiley-Interscience , XP002559591 , pages VI/198-VI/205

## Description

### Technical Field

The present invention relates to acrylic polymer beads and their sol composition for making acrylic sol that can be used as an alternative to PVC sol and applied to automobile underbody floor, wheel housing, fuel tank, automobile body panel junction, hood, and door to provide water proof, vibration proof, anticorrosive effects.

### Background Art

The one of the five general-purpose resins, polyvinylchloride (PVC) is used for various applications, such as plastics, films, adhesives, etc., primarily for plastic sols. The most popular plastic sol for the industrial purpose is the PVC sol that is prepared by dispersion of both PVC powder and fillers in a plasticizer. According to the use, a pigment, a thermal stabilizer, a foaming agent, a diluent, and etc could be contained in the PVC sol.

The plastic sol is widely used in various applications, including automobile, carpet, wallpaper, coating, or the like. In particular, the PVC sol is generally applied to automobile underbody floor, wheel housing, fuel tank or the like to provide water proof, vibration proof, anticorrosive effects and the like, and automobile body panel junction, hood, door, or the like to provide water proof and anticorrosive effects, respectively. The PVC sol, however, gives off hydrogen chloride gas from its principal component, PVC, during incineration to cause damage on the incinerator and generation of dioxin as well as acid rain and destruction of the ozone layer. Due to these problems, the restriction on the use of the PVC sol has been consolidated and therefore many attempts made to substitute the PVC sol.

US 5 157 084 A discloses a process of making hollow polymer latex particles without the use of acid in the swellable polymer core wherein the latexes are useful as opacifying plastic pigments for various coatings and particularly as gloss-enhancing plastic pigments for paper and paperboard coatings.

WO 02/44290 A2 discloses an aqueous heteropolymer dispersion for manufacturing coatings. The particles of the dispersion comprise copolymers that include acrylic monomer units and comprising a core and at least one outer shell wherein the average size of the particles is of 50 to 220 nanometers.

EP 0536935 A1 discloses Core/shell additives prepared separately at small particle sizes by emulsion polymerization and co-agglomeration. Further the particles are encapsulated by a final shell, and isolated by spray-drying or coagulation. The isolated powders are readily redispersed to their original particle sizes in the matrix polymer.

In this regard, Japanese Patent Laid-open Nos. H07-102147, 08-3411 and 08-73601 disclose a method for preparing acrylic polymers and their sol. According to the method, the acrylic polymers for sol have a double-layered or multi-layered core/shell structure, and the core is comprised of a polymer highly compatible with a plasticizer and the shell is comprised of a polymer poor in compatibility with the plasticizer. The acrylic polymer particle of the core/shell structure gets storage stabilities from the shell retarding gelation caused by the plasticizer at the storage temperature, and forms a coating from the polymer of the core highly compatible with the plasticizer at the gelation temperature. But the composition of core and shell, and the particle size of the acrylic polymer as disclosed in those documents heavily affect its coating properties and storage stabilities. Therefore, it is highly required to develop the method to make multi-layered acrylic polymer beads with excellent coating properties and storage stabilities at the same time.

The inventors of the present invention found the method to make core/shell structured acrylic polymer beads having narrow particle diameter distribution of 0.2 to 0.5 µm (Korean Patent Application No. 2003-48971, filed on July 18, 2003), through emulsion polymerization. The core/shell structured acrylic polymer beads were prepared by; forming seed at first through the seed polymerization by using a part of the core-constituting monomer, then forming core by using the rest of the monomer, and lastly forming shell by one after another. The acrylic sol made from the above-described acrylic polymer beads gave excellent coating properties after gelation. But in the aspect of the storage stabilities, further improvement was needed.

### Disclosure of Invention

In an attempt to solve the problems related to the poor storage stabilities of the acrylic sol and the deteriorated properties of the coating formed after gelation in the preparation of acrylic polymer beads having core/shell structure, the inventors of the present invention have found that storage stabilities were highly increased as a result of forming the outermost layer, which is made by adding a mixture of an emulsifier and the monomer containing acrylic acid additionally to reaction medium of previously formed shell under the existence of initiator. And we also found that the coating properties and storage stabilities of the acrylic sol containing the acrylic beads prepared after spray-drying or salting out were heavily influenced by a particle size of the polymer in emulsion obtained by the method.

It is therefore an object of the present invention to provide acrylic polymer beads of core/shell/outermost-layer structure having high storage stabilities and excellent coating properties, and preparation method thereof.

It is another object of the present invention to provide the acrylic sol compositions for coating automobile underbody which comprise the acrylic polymer beads, plasticizer, filler, the adhesive promoting agent, pigment, dye and etc and have excellent coating properties after gelation and high storage stabilities.

The objects of the present invention were achieved by the acrylic polymer beads according to claim 1.

To achieve the objects of the present invention, there is provided a method for preparing acrylic polymer beads of the invention through spray-drying or salting out the emulsion obtained by emulsion polymerization, wherein the method comprises following steps:
(a) adding ion-exchange water, 5 to 60 wt.% of the core-constituting monomer, and an emulsifier to a reactor, heating the reactor, adding an aqueous initiator, and performing polymerization for 1 to 4 hours to form seed;
(b) adding dropwise the rest of the core-constituting monomer and further performing polymerization for 1 to 6 hours to form core; and
(c) adding dropwise the shell-constituting monomer comprising 60 to 90 wt.% of the monomer, and further performing the polymerization for 2 to 4 hours to form the shell,
wherein the method further comprising step (d) adding dropwise the mixture of an emulsifier and monomer containing acrylic acid to the resultant of step (c), then adding initiator, and performing further polymerization for 2 to 4 hours to form a outermost-layer,

wherein the content of acrylic acid is S~20wt.% based on the total weight of the monomer constituting the outermost layer.

Additionally, there is provided the acrylic sol composition for automobile containing the acrylic polymer beads having core/shell/outermost-layer structure as obtained by the above-described method.

Detailed process to prepare the acrylic polymer beads having core/shell/outermost layer structure according to the present invention is as follows.

The first step of of the method involves in adding an ion-exchange water, 5 to 60 wt.% of the monomers constituting the core with an appropriate amount of a crosslinking agent, and an emulsifier to a reactor, heating the reactor to an internal temperature of 60 to 90 °C under nitrogen atmosphere, adding an aqueous initiator and perform polymerization for 1 to 4 hour to form seed.

The second step of the method involves in adding the rest of the monomers constituting the core in an amount of 40 to 95 wt.% and the emulsifier to the reactor and perfoming polymerization to form the core.

The third step of the method involves in adding the monomers constituting the shell with an appropriate amount of the crosslinking agent while maintaining internal temperature of the reactor constant, performing polymerization, and further adding an initiator to complete polymerization and obtain the emulsion containing the acrylic polymer beads characterized by core/shell structure and an average particle diameter of 0.2 to 0.7µm with a standard deviation of 1 to 12 % with respect to the average particle diameter.

The fourth step of the method involves in adding dropwise the mixture solution containing an emulsifier and the monomer containing acrylic acid to the resultant of the third step, then adding additional initiator, and performing further polymerization for 2 to 4 hours to obtain the emulsion containing the core/shell/outermost-layer structured acrylic polymer beads.

An outermost layer formed on the shell improves the storage stabilities of the acrylic sol containing acrylic polymer beads, because an outermost layer lowers polymer bead's compatibility with the plasticizer and eventually retard gelation reaction which is carried out by the penetration of the plasticizer to polymer beads

The acrylic polymer beads are obtained through a spray-drying or salting out the emulsion containing core/shell/outermost-layer structured acrylic polymer beads that are prepared by the procedures described above.

On the aspect of the coating properties and storage stabilities of the acrylic sol containing the acrylic polymer beads obtained after spray-drying or salting out, it is preferable to keep the average particle diameter of the emulsion to be 0.4 to 0.7 µm. If the average particle diameter of the emulsion containing the acrylic polymer beads is larger than 0.7µm, it is not easy to conduct the polymerization process well, or, if smaller than 0.4 µm, there would be problems such that the coating properties are considerably deteriorated, in case the acrylic polymer beads are obtained through spray-drying method. More preferably, the acrylic polymer beads give best coating properties and storage stabilities when the average particle diameter of the emulsion containing the acrylic polymer beads is 0.5~0.7µm.

And the average particle diameter of the acrylic polymer beads obtained through spray-drying or salting out the emulsion containing the acrylic polymer beads is 10~100µm. If the average particle diameter of the acrylic polymer beads is smaller than 10µm, the appearance and the coating properties are good, but yields by spray-drying are largely decreased and working efficiency is deteriorated due to sprinkling micro-particles. If it is larger than 100µm, appearance of coating is coarse and mechanical properties can be deteriorated due to the decrease of coating strength.

In the preparation of the acrylic polymer beads of this invention, the monomer constituting the core comprises 50~90 wt.% of the monomers, of which homopolymer has Tg (glass transition temperature) not higher than 50°C, and the specific examples of them may include the acrylic acid esters having C1~C8 alkyl groups such as methyl acrylate, ethyl acrylate, propyl acrylate, n-butyl acrylate, 2-ethylhexyl acrylate; the methacrylic acid ester having C1~C4 alkyl groups such as methyl methacrylate, ethyl methacrylate, n-butyl methacrylate, and iso-butyl methacrylate; and the methacrylic acid hydroxyl alkyl esters such as methacrylic acid 2-hydroxy ethyl, methacrylic acid hydroxy propyl.

These monomers can be used in combination of at least one appropriately according to the objective and use. Especially, it is more preferable to use at least one of the acrylic acid esters such as n-butyl acrylate, 2-ethylhexyl acrylate and the methacrylic acid esters such as n-butyl methacrylate, iso-butyl methacrylate to control Tg of the core and improve the adhesiveness toward the object.

On the other hand, the monomer constituting the shell contains 60-90 wt.% of the monomer, of which homopolymer has Tg not lower than 50°C, and the specific examples of them may include the methacrylic acid esters having C1~C4 alkyl groups such as methyl methacrylate, ethyl methacrylate, n-butyl methacrylate, iso-butyl methacrylate; and the methacrylic acid hydroxy alkyl esters such as methacrylic acid 2-hydroxy ethyl, methacrylic acid hydroxy propyl.

These monomers can be used in combination of at least one appropriately according to the objective and use. Especially, it is more preferable to use the methacrylic acid esters such as methyl methacrylate for the storage stabilities of the acrylic sol.

Here, glass transition temperature (Tg) of the homopolymer from its own monomer is referred to 'Polymer Handbook 2nd Edition, J. Willey & Sons, New York (1975)'.

In addition to the core-constituting monomer and the shell-constituting monomer, the monomers constituting the outermost layer may include the ethylenic carboxylic acids such as acrylic acid, methacrylic acid, maleic acid, fumaric acid, itaconic acid, and these monomers can be used in combination of at least one. More preferably, acrylic acid should be included. The amount of acrylic acid among the monomers constituting the outermost layer has to satisfy as much as 5~20wt.%. If the amount of acrylic acid among the monomers constituting the outermost layer is lower than 5wt.%, it is not possible to get aimed storage stabilities, and if higher than 20wt.%, there would be the problems such that moisture absorptivity could be high.

Preferably, the weight ratio of monomer constituting core/shell/outermost-layer is 50~80/10~40/10~20(wt.%/wt.%/wt.%). If the amount of the monomer constituting the outermost layer is lower than 10wt.%, it is not possible to completely form a outermost layer around the bead, and if higher than 20 wt.%, it can cause the coating properties to be deteriorated.

The specific examples of the initiator as used herein for polymerization of the acrylic polymer beads according to the present invention may include the initiator which can be generally used for emulsion polymerization of the acrylic polymers. These compounds for example can be in particular catalytic systems of persulfate type such as ammonium persulfate, potassium persulfate and in particular catalytic systems of redox type such as persulfoxylate/organic peroxide, persulfate/sulfite.

The content of the initiator is preferably 0.005 to 0.5 part by weight based on 100 parts by weight of the monomer for each layer.

The specific examples of the emulsifier as used herein for polymerization of the acrylic polymer beads according to the present invention may include anionic emulsifiers such as sodium, ammonium or potassium salts of C₄-C₃₀ alkyl sulfate such as dodecyl sulfate, dioctyl persulfosuccinate, dihexyl sulfosuccinate, dodecyl benzene sulfate ; reactive emulsifiers such as alkyl penoxy polyethyleneglycol acrylate; acidic phosphate methacrylic acid ester, alkyl aryl penoxy polyethyleneglycol, sodium-ω-acryloyloxy alkyl(trialkyl) ammonium-paratoluene sulfonate, sodium-polystyrene phenyl ether sulfate, polyoxyethylene-1-(allyloxymethyl)alkyl ether sulfonic acid ester ammonium salt; and amphoteric emulsifiers such as lauryl dimethyl amine oxide. The content of the emulsifier is preferably 0.1 to 4.0 part by weight based on 100 parts by weight of the monomer for each layer.

According to each polymerization step in specific purpose, monomer, initiator, emulsifier can be added by any methods well-known such as one-shot, part-shot, and continuous-shot addition.

The ion-exchange water used for polymerization of the acrylic polymer beads according to the present invention can include general purpose industrial one. But to improve its purity of the acrylic polymer beads, it is preferable to use purified water having a resistance of more than 5 MΩ in the nitrogen atmosphere as generated from an ion exchanger. The used amount of the ion-exchange water is preferably 80 to 800 parts by weight based on the total weight of the monomers.

The weight average molecular weight (Mw) of the acrylic polymer beads according to the present invention can be properly chosen by the applications. On the aspect of the coating strength and the storage stabilities of the sol, it is preferable to be a range of 50,000~3,000,000 g/mol and more preferably a range of 100,000~2,000,000 g/mol. If the Mw is lower than 50,000 g/mol, the storage stabilities of the sol and the coating properties are deteriorated, and, if higher than 3,000,000 g/mol, the production efficiency is decreased.

The acrylic polymer beads having core/shell/outermost-layer structure are used to prepare the acrylic sol for automobile underbody coating and etc. An unlimited example of the composition based on 100 parts by weight of the acrylic polymer beads prepared as mentioned above is 100~200 parts by weight of the plasticizer, 110~180 parts by weight of the filler, 10~30 parts by weight of the adhesive promoting agent, 0~10 parts by weight of the dye or pigment and other conventional additives that are generally used in the plastic sol.

The specific examples of the plasticizer used for the acrylic sol composition of the present invention may include phthalate esters such as dimethyl phthalate, diethyl phthalate, dibutyl phthalate, dihexyl phthalate, di-2-ethyl hexyl phthalate, diisodecyl phthalate, dioctyl phthalate, diisononyl phthalate, dimethoxyethyl phthalate, diundecyl phthalate, butylbenzyl phthalate, bis(methoxyethyl) phthalate, bis(ethoxyethyl) phthalate, bis(butoxyethyl) phthalate and the like; phosphate esters such as diphenyloctyl phosphate, tributyl phosphate, trimethyl phosphate, tricresyl phosphate, triphenyl phosphate, tri-2-ethylhexyl phosphate, cresyl diphenyl phosphate, triaryl phosphate ; and adiphate esters such as dioctyl adiphate, diisodecyl adiphate. These plasticizers can be used in combination of at least one, but the phthalate esters are especially preferable.

The content of the plasticizer is preferably 100 to 200 parts by weight based on 100 parts by weight of the acrylic polymer beads. If the content of the plasticizer is less than 100 parts by weight based on 100 parts by weight of the acrylic polymer beads, then the sol composition cannot be applied by spray coating or the like because of its extremely high viscosity, and the coating formed after gelation of the sol composition has low impact strength. On the other hand, if the content of the plasticizer exceeds 200 parts by weight, then the sol composition has an extremely low viscosity and runs down before the formation of the coating by gelation, and the plasticizer flows out after gelation.

The specific examples of the filler for the acrylic sol composition may include calcium carbonate, talc, clay, silica, mica, kaolin, aluminum hydroxide, bentonite, and aluminum oxide. These fillers can be used in combination of at least one. The content of the filler is preferably 110 to 180 parts by weight based on 100 parts by weight of the acrylic polymer beads. The content of the filler less than 110 parts by weight deteriorates the property-compensating effect of the filler, but the content of the filler exceeding 180 parts by weight leads to an extremely high viscosity and deteriorates the properties of the coating formed after gelation.

When the acrylic sol composition of the present invention is used as a coating on the automobile underbody and applied to the bottom of an automobile, the adhesive promoting agent is used for the adhesion to steel plates. Namely, the addition of the adhesive promoting agent is necessary for the adhesive strength while the automobile is running, in order to maintain the water proof, vibration proof, and anticorrosive functions of the acrylic sol applied on the automobile underbody.

The specific examples of the adhesive promoting agent may include the epoxy coupling agents such as bisphenol-A epoxy, tetrabromobisphenol-A epoxy, urethane-modified epoxy, rubber-modified epoxy, trifunctional epoxy, tetrafunctional epoxy, polyfunctional bisphenol-A epoxy, phenol novolak epoxy, cresol novolak epoxy, bisphenol-A novolak epoxy, or include block isocyanate, silane, aluminium, titan coupling agents. These adhesive promoting agents can be used in combination of at least one and the content of the adhesive promoting agent is preferably less than 10~30 parts by weight based on 100 parts by weight of the acrylic polymer beads. The content of the adhesive promoting agent less than 10 parts by weight deteriorates the adhesion to steel plates but the content of the adhesive promoting agent exceeding 30 parts by weight goes downhill the storage stabilities of the sol.

The specific examples of the dye and pigment as a colorant may include at least one selected from the group consisting of azo dyes, phthalocyanine dyes, basic pigment dyes, quinacridone dyes, dioxazin dyes, condensation azo dyes, and metal powders which are for example carbon black, titanium oxide, chromate, ferrocyanide, sulfate, silicate, carbonate, phosphate. The content of the dye and pigment as a colorant is preferably less than 10 parts by weight based on 100 parts by weight of the acrylic polymer beads.

Other related additives in the area of the plastic sol can be properly included, for example, a forming agent, a antioxidant, a water absorber, a UV-stabilizer, a flow controller, a viscosity controller and etc. The type and its content can be chosen by those skilled in the art in accordance with the purpose.

### Best Mode for Carrying out the Invention

Hereinafter, the present invention will be described in detail by way of the following examples.

### Example 1

In the first step, 700 g of ion-exchange water was added to a 3l-flask and heated to an internal temperature of 70 °C in a nitrogen atmosphere. A mixed solution containing 240 g of the mixture of core-constituting monomers, isobutyl methacrylate and methylmethacrylate and 2 g of sodium dioctylpersulfosuccinate was prepared. Only 30 wt.% of the mixed solution was added to a reactor and stirred at 200 rpm for 15 minutes. Subsequently, the solution was treated with 15 ml of a potassium persulfate solution and stirred for 60 minutes for polymerization to form seed.

In the second step, after the completion of the polymerization, the rest of the mixed solution was added dropwise to the reactor over 30 minutes and further polymerized for 4 hours to form core.

After adding 7 ml of the potassium persulfate solution and stirring for 30 minutes, in the third step, the mixture which contains 80 g of a mixed solution of methyl methacrylate and isobutyl methacrylate, and 2 g of sodium dioctylpersulfosuccinate was added dropwise to the reactor over 40 minutes, treated with 15 ml of the potassium persulfate solution, and polymerized for 2 hours.

In the forth step, the mixture which contains 80 g of the mixed solution of methyl methacrylate and acrylic acid (acrylic acid 4g), and 2 g of sodium dioctylpersulfosuccinate was added dropwise to the reactor over 30 minutes, treated with 15 ml of the potassium persulfate solution, and further polymerized for 2 hour to complete polymerization.

The acrylic polymer beads contained in the emulsion thus obtained were analyzed in regard to particle diameter and particle diameter distribution with 'Submicron Particle Sizer (NICOMP Co., Autodilute Model 370)' using the absorbence of suspension in the measurement cell.

In addition, the beads in the emulsion were dried with a spray drier having an inlet temperature of 220 °C and an outlet temperature of 88 °C under feeding rate of 2kg/hr. The size of the dried acrylic polymer beads was then measured with 'Scanning Electron Microscopy (SEM)'.

After dissolving the dried acrylic polymer beads obtained above in tetrahydrofuran (THF) at room temperature for 24 hours, the weight average molecular weight (Mw) was determined by GPC (Gel permeation chromatography) using polystyrene as standard.

### Example 2~3

The procedures were performed to prepare acrylic polymer beads having core/shell/outermost-layer structure in the same manner as described in Example 1, except that monomer composition of the outermost layer was changed as table 1.

### Comparative Example 4~5

The procedures were performed to prepare acrylic polymer beads having core/shell/outermost-layer structure in the same manner as described in Example 1, except that monomer compositions of the core, shell and outermost layer were changed as table 1.

### Example 6

The procedures were performed to prepare acrylic polymer beads having core/shell/outermost layer structure in the same manner as described in Example 1, except that isobutyl methacrylate was replaced with n-butyl methacrylate in the monomer composition of the core.

### Comparative Example 1

In the first step, 700 g of ion-exchange water was added to a 3l-flask and heated to an internal temperature of 70 °C in nitrogen atmosphere. The mixed solution containing 240 g of the mixture of core-constituting monomers, isobutyl methacrylate and methylmethacrylate, and 2 g of sodium dioctylpersulfosuccinate was prepared. Only 30 wt.% of the mixed solution was added to a reactor and stirred at 200 rpm for 15 minutes. Subsequently, the solution was treated with 15 ml of a potassium persulfate solution and stirred for 60 minutes for polymerization to form seed.

In the second step, after the completion of the polymerization of the first step, the rest of the mixed solution was added dropwise to the reactor over 30 minutes and further polymerized for 4 hours to form core.

After adding 7 ml of the potassium persulfate solution and stirring for 30 minutes, in the third step, the mixture which contains 160 g of a mixed solution of methyl methacrylate and isobutyl methacrylate, and 2 g of sodium dioctylpersulfosuccinate was added dropwise to the reactor over 40 minutes, treated with 15 ml of the potassium persulfate solution, and polymerized for 2 hours.

The acrylic polymer beads contained in the emulsion thus obtained were analyzed in regard to particle diameter and particle diameter distribution and dried bead size was measured in the same manner as described in Example 1.

### Comparative Example 2~3

The procedures were performed to prepare acrylic polymer beads in the same manner as described in Example 1, except that a monomer composition of the outermost layer was changed as table 1.

**Table 1**

| | Monomer composition | | | | | | Bead properties | | |
|---|---|---|---|---|---|---|---|---|---|
| | Core (g) | | Shell (g) | | Outermost layer(g) | | APD of the emulsion (µm)* | APD of the polymer beads (µm)** | Mw (X 10³ g/mol) |
| A 1 | iBMA (160) | MMA (80) | iBMA (16) | MMA (64) | NMA (76) | AA (4) | 0.5 | 25 | 960 |
| A 2 | iBMA (160) | MMA (80) | MMA (16) | MMA (64) | MMA (72) | AA (8) | 0.5 | 30 | 820 |
| A 3 | iBMA (160) | MMA (80) | iBMA (16) | MMA (64) | MMA (64) | AA (16) | 0.5 | 23 | 890 |
| B 4 | iBMA (120) | MMA (160) | iBMA (32) | MMA (128) | MMA (36) | AA (4) | 0.7 | 35 | 1,010 |
| B 5 | iBMA (120) | MMA (160) | iBMA (24) | MMA (96) | MMA (36) | AA (4) | 0.7 | 30 | 1,050 |
| A 6 | nBMA (160) | MMA (80) | iBMA (16) | MMA (64) | MMA (76) | AA (4) | 0.6 | 25 | 850 |
| B 1 | iBMA (160) | MMA (80) | iBMA (32) | MMA (128) | MMA (0) | AA (0) | 0.5 | 35 | 670 |
| B 2 | iBMA (160) | MMA (80) | iBMA (16) | MMA (64) | MMA (80) | AA (0) | 0.5 | 30 | 560 |
| B 3 | iBMA (160) | MMA (80) | iBMA (16) | MMA (64) | MMA (56) | AA (24) | 0.6 | 25 | 960 |
| Note) iBMA : isobutyl methacrylate, nBMA : n-butyl methacrylate, MMA : methyl methacrylate | | | | | | | | | |
| AA : acrylic acid, A: Example B: Comparative Example, | | | | | | | | | |
| *Average particle diameter (APD) of the emulsion containing polymer beads, | | | | | | | | | |
| **Average particle diameter (APD) of the polymer beads after spray-drying. | | | | | | | | | |

Subsequently, 25 parts by weight of the dried acrylic polymer beads prepared from Examples and Comparative Examples as shown above, 35 parts by weight of calcium carbonate as a filler, and 3 parts by weight of an block isocyanate-based adhesive promoting agent (ADMORE U-401, supplied by Hanbae Corporation), were dispersed in 35 parts by weight of dioctylphthalate used as a plasticizer and 2 parts by weight of carbon black to form an acrylic sol.

The sol thus obtained was measured in regard to the initial viscosity with a Brookfield Viscometer No. 7 Spindle at 20 °C, and 20 rpm, and then after the sol was kept at 40 °C for 14 days, its viscosity was measured again to evaluate a rate of the viscosity change from the initial one.

The sol was applied to a thickness of 2 mm by airless spray and subjected to gelation at 130 °C for 20 minutes to measure its coating properties. Mechanical properties such as tensile strength, elongation and modulus were determined by 'Instron tensometer (model 1170)' based on ASTM D638 and the results were displayed in table 2.

**Table 2**

| | Coating properties | | | Storage stabilities of the sol | | |
|---|---|---|---|---|---|---|
| | Tensile Strength (MPa) | Elongation (%) | Modulus (MPa) | Initial viscosity (mPa·s (cps)) | Viscosity after 14 days (mPa·s (cps)) | Rate of viscosity change (%) |
| A 1 | 0.7 | 325 | 11.3 | 48,000 | 54,500 | 13.5 |
| A 2 | 0.5 | 321 | 11.7 | 43,000 | 35,000 | -18.6 |
| A 3 | 0.8 | 289 | 12.5 | 48,000 | 39,000 | -18.8 |
| B 4 | 0.8 | 305 | 14.1 | 45,000 | 64,200 | 42.7 |
| B 5 | 0.9 | 275 | 14.5 | 47,000 | 67,300 | 43.2 |
| A 6 | 0.6 | 348 | 10.2 | 45,000 | 58,400 | 29.8 |
| B 1 | 0.2 | 125 | 1.2 | 40,000 | 220,000 | 450.0 |
| B 2 | 0.3 | 330 | 2.8 | 42,000 | solidified | - |
| B 3 | 0.8 | 30 | 18.4 | 31,800 | 106,000 | 233.0 |
| Note) A: Example B: Comparative Example | | | | | | |

As displayed in table 2 above, the rate of viscosity change of the acrylic sol composition, containing the acrylic polymer beads which had the outermost layer formed after the monomer containing acrylic acid added dropwise to the resultant of core/shell structured beads and then further polymerized shown in Example 1~3 and 6 was less than 50%. But the rate of viscosity change of the acrylic sol composition containing acrylic polymer beads which only had core/shell structure was 450%. It showed that the storage stabilities were remarkably increased due to the outermost layer formed on the core/shell structured beads.

And also, it was shown from Comparative Example 2 that the storage stabilities was decreased if acrylic acid is not included in the outermost layer, even though acrylic polymer beads had core/shell/outermost-layer structure. On the other hands, it was shown from Comparative Example 3 that elongation (%) of the coating was decreased if the content of acrylic acid is more than 30 parts by weight based on the total weight of monomer constituting the outmost layer.

### Industrial availability

The acrylic polymer beads having core/shell/outermost-layer structure according to the present invention, which are prepared by seed polymerizing a part of the monomer constituting core to form seed, polymerizing the rest of the monomer to form core, sequentially forming shell, and further polymerizing additives and the monomer containing acrylic, provided high storage stabilities and excellent properties of the coating formed after gelation.

Accordingly, the acrylic sol composition thus obtained can be applied, as a substitute for the PVC sol, to the automobile underbody floor, wheel housing, fuel tank, automobile body panel junction and hood, door, to provide water proof, vibration proof, and anticorrosive effects.

While this invention has been described in connection with the embodiments, it is to be understood to those skilled in the art that the invention is not limited to the disclosed embodiments, but is intended to cover various modifications and equivalent variants.

## Claims

1. The acrylic polymer beads having core/shell/outermost-layer structure, wherein the beads comprise:
A core formed by emulsion polymerization of the core-constituting monomers the core-constituting monomers comprising 50 to 90 wt.% of the monomers having Tg of its homopolymer is not higher than 50 °C;
A shell formed by emulsion polymerization of the shell-constituting monomers the shell-constituting monomer comprising 60 to 90 wt.% of the monomers having Tg of its homopolymer is not lower than 50°C; and
An outermost layer formed by emulsion polymerization of acrylic acid and at least one monomer selected from the group consisting of the core-constituting monomer and the shell-constitutina monomer, wherein the content of the acrylic acid is 5-20 wt.% based on the total weight of the monomer constituting the outermost layer.

2. The acrylic polymer beads as claimed in claim 1, wherein the weight ratio of monomer constituting core/shell/outermost-layer is 50~80/10~40/10-20(wt.%/wt.%/wt.%),

3. The acrylic polymer beads as claimed in claim 1, wherein the average particle diameter of the acrylic polymer beads is 10~100µm.

4. The acrylic polymer beads as claimed in claim 1, wherein the weight average molecular weight (Mw) of the acrylic polymer beads is in a range of 100,000~2,000,000 g/mol.

5. The acrylic polymer beads as claimed in claim 1, wherein the monomer constituting the core is at least one selected from acrylic acid esters having C1~C8 alkyl groups, methacrylic acid esters having C1~C4 alkyl groups, and methacrylic acid hydoxyalkylesters having C1~C4 alkyl groups.

6. The acrylic polymer beads as claimed in claim 1, wherein the monomer constituting the shell is at least one selected from methacrylic acid esters having C1~C4 alkyl groups, and methacrylic acid hydoxyalkylesters having C1~C4 alkyl groups.

7. The method for preparing acrylic polymer beads as defined in any one of claims 1 to 6 through spray-drying or salting out of the emulsion obtained by emulsion polymerization, wherein the method comprises following steps:
(a) adding ion-exchange water, 5 to 60 wt.% of the core-constituting monomers comprising 50 to 90 wt.% of the monomers having Tg of its homopolymer is not higher than 50°C, and an emulsifier to a reactor, heating the reactor, adding an aqueous initiator, and performing polymerization for 1 to 4 hours to form seed;
(b) adding dropwise the rest of the core-constituting monomers and further performing polymerization for 1 to 6 hours to form core; and
(c) adding dropwise the shell-constituting monomers comprising 60 to 90 wt.% of the monomers having Tg of its homopolymer is not lower than 50°C, and further performing the polymerization for 2 to 4 hours to form the shell,
wherein the method further comprising step (d) adding dropwise the mixture of an emulsifier, acrylic acid, and at least one monomer selected from the group consisting of the core-constituting monomer and the shell-constituting monomer, to the resultant of step (c), then adding initiator, and performing further polymerization for 2 to 4 hours to form a outermost-layer, wherein the content of acrylic acid is 5~20 wt.% based on the total weight of the monomer constituting the outermost layer.

8. The method for preparing acrylic polymer beads as claimed in claim 7, wherein the average particle diameter of the emulsion containing acrylic polymer beads after step (d) is 0.4-0.7 µm.

9. Acrylic polymer beads having core/shell/outermost-layer structure obtained from the method as claimed in claim 7.

10. The acrylic sol composition for coating automobile underbody comprising acrylic polymer beads as claimed in claim 1 or 9, filler, plasticizer, adhesion promoting agent, dye and pigment.

11. The acrylic sol composition for coating automobile underbody as claimed in claim 10, wherein the composition comprises 100~200 parts by weight of plasticizer, 110~180 parts by weight of filler, 10~30 parts by weight of adhesion promoting agent and 0~10 parts by weight of dye, based on 100 parts by weight of acrylic polymer beads.

12. The acrylic sol composition for coating automobile underbody as claimed in claim 10, wherein an initial viscosity is 30,000 to 80,000 mPa·s (cps) as measured with a Brookfield Viscometer No. 7 Spindle at 20 °C and 20 rpm.

13. The acrylic sol composition for coating automobile underbody as claimed in claim 10, wherein the rate of viscosity is less than 50 % with respect to the initial viscosity as measured with a Brookfield Viscometer No. 7 Spindle at 20 °C and 20 rpm after 14 days of storage in a thermohydrostat at 40 °C, and 95 % RH (relative humidity).

## Patentansprüche

1. Acrylpolymerperlen mit einer Kern/Schale/äußerste Schicht-Struktur, wobei die Perlen umfassen:
einen Kern, gebildet durch Emulsionspolymerisation der den Kern aufbauenden Monomeren, wobei die den Kern aufbauenden Monomeren 50 bis 90 Gew.% Monomere umfassen, deren Homopolymer eine Tg von nicht höher als 50 °C besitzt;
eine Schale, gebildet durch Emulsionspolymerisation der die Schale aufbauenden Monomeren, wobei die die Schale aufbauenden Monomeren 60 bis 90 Gew.% Monomere umfassen, deren Homopolymer eine Tg von nicht unterhalb 50 °C besitzen; und
eine äußerste Schicht, gebildet durch Emulsionspolymerisation von Acrylsäure und mindestens einem Monomer, gewählt aus der Gruppe, bestehend aus dem den Kern aufbauenden Monomeren und dem die Schale aufbauenden Monomeren, wobei der Gehalt an Acrylsäure 5 - 20 Gew.% beträgt, bezogen auf das Gesamtgewicht des die äußerste Schicht aufbauenden Monomeren.

2. Acrylpolymerperlen nach Anspruch 1, wobei das Monomergewichtsverhältnis zum Aufbau Kern/Schale/äußerste Schicht 50-80/10-40/10-20 (Gew.%/Gew.%/Gew.%) beträgt.

3. Acrylpolymerperlen nach Anspruch 1, wobei der durchschnittliche Teilchendurchmesser der Acrylpolymerperlen 10 -100 µm beträgt.

4. Acrylpolymerperlen nach Anspruch 1, wobei das gewichtsmittlere Molekulargewicht (Mw) der Acrylpolymerperlen im Bereich von 100.000 - 2.000.000 g/mol liegt.

5. Acrylpolymerperlen nach Anspruch 1, wobei das den Kern aufbauenden Monomer mindestens eines ist, gewählt aus Acrylsäureestern mit C1 - C8-Alkylgruppen, Methacrylsäureestern mit C1 - C4-Alkylgruppen und Methacrylsäurehydroxyalkylestern mit C1 - C4-Alkylgruppen.

6. Acrylpolymerperlen nach Anspruch 1, wobei das die Schale aufbauende Monomer mindestens eines ist, gewählt aus Methacrylsäureestern mit C1 - C4-Alkylgruppen und Methacrylsäurehydroxyalkylestern mit C1 - C4-Alkylgruppen.

7. Verfahren zur Herstellung von Acrylpolymerperlen gemäß mindestens der Ansprüche 1 bis 6 durch Sprühtrocknen oder Aussalzen der durch Emulsionspolymerisation erhaltenen Emulsion, wobei das Verfahren die folgenden Schritte umfasst:
(a) Zugeben von Ionenaustauschwasser, 5 bis 60 Gew.% der den Kern aufbauenden Monomeren, umfassend 50 bis 90 Gew.% Monomere, deren Homopolymer eine Tg von nicht höher als 50 °C aufweist, und einen Emulgator zu einem Reaktor, Erwärmen des Reaktors, Zugeben eines wässrigen Initiators und Durchführen einer Polymerisation während 1 bis 4 Stunden zur Bildung von Keimen;
(b) tropfenweises Zugeben des Rests der den Kern aufbauenden Monomeren und weitere Durchführung einer Polymerisation während 1 bis 6 Stunden zur Bildung des Kerns; und
(c) tropfenweises Zugeben der die Schale aufbauenden Monomeren, umfassend 60 bis 90 Gew.% Monomere, deren Homopolymer eine Tg von nicht unterhalb 50 °C aufweist, und weiteres Durchführen der Polymerisation während 2 bis 4 Stunden zur Bildung der Schale,
wobei das Verfahren weiterhin umfasst Schritt (d) tropfenweises Zugeben der Mischung aus einem Emulgator, Acrylsäure und mindestens einem Monomer, gewählt aus der Gruppe, bestehend aus dem den Kern aufbauendem Monomer und dem die Schale aufbauendem Monomer zu dem aus Schritt (c) resultierenden Produkt, danach Zugeben von Initiator und Durchführen einer weiteren Polymerisation während 2 bis 4 Stunden zur Bildung einer äußersten Schicht, wobei der Gehalt an Acrylsäure 5 - 20 Gew.% beträgt, bezogen auf das Gesamtgewicht des die äußerste Schicht aufbauenden Monomeren.

8. Verfahren zur Herstellung von Acrylpolymerperlen nach Anspruch 7, wobei der durchschnittliche Teilchendurchmesser der Emulsion enthaltend Acrylpolymerperlen nach Schritt (d) 0,4 - 0,7 µm beträgt.

9. Acrylpolymerperlen mit einer Kern/Schale/äußerste Schicht-Struktur, erhalten nach dem Verfahren gemäß Anspruch 7.

10. Acrylsolzusammensetzung zur Beschichtung eines Automobilunterkörpers, umfassend Acrylpolymerperlen gemäß den Ansprüchen 1 oder 9, Füllstoff, Plastifiziermittel, adhäsionsförderndes Mittel, Farbstoff und Pigment.

11. Acrylsolzusammensetzung zur Beschichtung eines Automobilunterkörpers nach Anspruch 10, wobei die Zusammensetzung 100 - 200 Gewichtsteile Plastifiziermittel, 110 - 180 Gewichtsteile Füllstoff, 10 - 30 Gewichtsteile adhäsionsförderndes Mittel und 0 - 10 Gewichtsteile Farbstoff umfasst, bezogen auf 100 Gewichtsteile Acrylpolymerperlen.

12. Acrylsolzusammensetzung zur Beschichtung eines Automobilunterkörpers nach Anspruch 10, deren anfängliche Viskosität 30.000 bis 80.000 mPa · s (cps) beträgt, gemessen mit einem Brookfield Viskosimeter, Spindel Nr. 7, bei 20 °C und 20 Upm.

13. Acrylsolzusammensetzung zur Beschichtung eines Automobilunterkörpers nach Anspruch 10, wobei die Viskositätsrate weniger als 50 % mit Bezug auf die anfängliche Viskosität beträgt, gemessen mit einem Brookfield Viskosimeter, Spindel Nr. 7, bei 20 °C und 20 Upm, nach 14 Tagen Lagerung in einem Thermohydrostat bei 40 °C und 95 % RH (relative Feuchtigkeit).

## Revendications

1. Billes de polymère acrylique ayant une structure noyau/enveloppe/couche externe, lesquelles billes comprennent :
un noyau formé par polymérisation en émulsion des monomères constituant le noyau, les monomères constituant le noyau comprenant entre 50 et 90 % en masse du monomère dont la température de transition vitreuse Tg de son homopolymère n'est pas supérieure à 50 °C ;
une enveloppe formée par polymérisation en émulsion des monomères constituant l'enveloppe, les monomères constituant l'enveloppe comprenant entre 60 et 90 % en masse du monomère dont la température de transition vitreuse Tg de son homopolymère n'est pas supérieure à 50 °C ; et
une couche externe formée par polymérisation en émulsion d'acide acrylique et d'au moins un monomère choisi dans le groupe constitué par le monomère constituant le noyau et le monomère constituant l'enveloppe, dans lesquelles la teneur en acide acrylique est comprise entre 5 et 20 % en masse, sur la base de la masse totale du monomère constituant la couche externe.

2. Billes de polymère acrylique selon la revendication 1, dans lesquelles le rapport en masse du monomère constituant la structure noyau/enveloppe/couche externe est de 50-80/10-40/10-20 (% en masse/% en masse/% en masse).

3. Billes de polymère acrylique selon la revendication 1, dans lesquelles le diamètre moyen des particules des billes de polymère acrylique est compris entre 10 et 100 µm.

4. Billes de polymère acrylique selon la revendication 1, dans lesquelles la masse moléculaire moyenne en poids (Mw) des billes de polymère acrylique est comprise entre 100 000 et 2 000 000 g/mol.

5. Billes de polymère acrylique selon la revendication 1, dans lesquelles le monomère constituant le noyau est au moins un choisi parmi les esters d'acide acrylique ayant des groupes alkyles en C₁ à C₈, les esters d'acide méthacrylique ayant des groupes alkyles en C₁ à C₄ et les hydroxyalkylesters d'acide méthacrylique ayant des groupes alkyles en C₁ à C₄.

6. Billes de polymère acrylique selon la revendication 1, dans lesquelles le monomère constituant l'enveloppe est au moins un choisi parmi les esters d'acide méthacrylique ayant des groupes alkyles en C₁ à C₄ et les hydroxyalkylesters d'acide méthacrylique ayant des groupes alkyles en C₁ à C₄.

7. Procédé de préparation de billes de polymère acrylique telles que définies dans l'une quelconque des revendications 1 à 6, par séchage par atomisation ou relargage de l'émulsion obtenue par polymérisation en émulsion, lequel procédé comprend les étapes suivantes consistant à :
(a) ajouter de l'eau échangeuse d'ions, à raison de 5 à 60 % en masse du monomère constituant le noyau comprenant entre 50 et 90 % en masse des monomères dont la température de transition vitreuse Tg de son homopolymère n'est pas supérieure à 50 °C, et un émulsifiant, dans un réacteur, chauffer le réacteur, ajouter l'initiateur aqueux et effectuer la polymérisation pendant 1 à 4 heures pour former des amorces;
(b) ajouter au goutte à goutte le reste des monomères constituant le noyau et effectuer une autre polymérisation pendant 1 à 6 heures pour former le noyau ; et
(c) ajouter au goutte à goutte les monomères constituant l'enveloppe comprenant entre 60 et 90 % en masse des monomères dont la température de transition vitreuse Tg de son homopolymère n'est pas supérieure à 50 °C, et effectuer une autre polymérisation pendant 2 à 4 heures pour former l'enveloppe,
lequel procédé comprend en outre l'étape consistant à (d) ajouter au goutte à goutte le mélange d'un émulsifiant, d'acide acrylique et d'au moins un monomère choisi dans le groupe constitué par le monomère constituant le noyau et le monomère constituant l'enveloppe, dans le produit résultant de l'étape (c), puis ajouter l'initiateur et effectuer une autre polymérisation pendant 2 à 4 heures pour former une couche externe, dans lequel la teneur en acide acrylique est comprise entre 5 et 20 % en masse, sur la base de la masse totale du monomère constituant la couche externe.

8. Procédé de préparation de billes de polymère acrylique selon la revendication 7, dans lequel le diamètre moyen des particules de l'émulsion contenant des billes de polymère acrylique après l'étape (d) est compris entre 0,4 et 0,7 µm.

9. Billes de polymère acrylique ayant une structure noyau/enveloppe/couche externe obtenue selon le procédé selon la revendication 7.

10. Composition de solution acrylique pour le revêtement de soubassement de carrosserie d'automobiles comprenant des billes de polymère acrylique selon la revendication 1 ou 9, une charge de remplissage, un plastifiant, un agent d'accrochage, un colorant et un pigment.

11. Composition de solution acrylique pour le revêtement de soubassement de carrosserie d'automobiles selon la revendication 10, laquelle composition comprend entre 100 et 200 parties en masse de plastifiant, entre 110 et 180 parties en masse de charge de remplissage, entre 10 et 30 parties en masse d'agent d'accrochage et entre 0 et 10 parties en masse de colorant, sur la base de 100 parties en masse de billes de polymère acrylique.

12. Composition de solution acrylique pour le revêtement de soubassement de carrosserie d'automobiles selon la revendication 10, dans laquelle une viscosité initiale est comprise entre 30 000 et 80 000 mPa · s (cps) telle que mesurée avec un viscosimètre Brookfield rotor n° 7 à 20 °C et 20 tr/min.

13. Composition de solution acrylique pour le revêtement de soubassement de carrosserie d'automobiles selon la revendication 10, dans laquelle le rapport de viscosité est inférieur à 50 % par rapport à la viscosité initiale telle que mesurée avec un viscosimètre Brookfield rotor n° 7 à 20 °C et 20 tr/min, après 14 jours de stockage dans un thermohygrostat réglé à 40 °C et 95 % d'HR (humidité relative).
